# EUROPEAN PATENT APPLICATION

(11) **EP 4 333 094 A1**
(43) Date of publication of application: **06.03.2024**
(21) Application number: 22795568.9
(22) Date of filing: 12.04.2022
(51) Int. Cl.: H01M 4/13, H01M 4/62

(54) **NON-AQUEOUS ELECTROLYTE SECONDARY BATTERY**

(30) Priority: 26.04.2021 JP 2021073784
(71) Applicant: Panasonic Intellectual Property Management Co., Ltd., Osaka-shi, Osaka 540-6207 (JP)
(72) Inventor: MATSUI Tooru, Kadoma-shi, Osaka 571-0057 (JP); ASAKA Keisuke, Kadoma-shi, Osaka 571-0057 (JP); SUZUKI Hirotetsu, Kadoma-shi, Osaka 571-0057 (JP); SAKATA Motohiro, Kadoma-shi, Osaka 571-0057 (JP); NAKURA Kensuke, Kadoma-shi, Osaka 571-0057 (JP)
(74) Representative: Novagraaf International SA
(86) International application number: PCT/JP2022/017554
(87) International publication number: WO 2022/230654

(57) **Abstract**

Provided is a non-aqueous electrolyte secondary battery with enhanced discharging performance. A non-aqueous electrolyte secondary battery according to one aspect of the present disclosure is provided with an electrode having: a current collector; and a mixture layer that is formed on a surface of the current collector and that contains an active material, a conducting agent, and a binding agent. The mixture layer contains a first mixture layer facing the current collector and a second mixture layer laminated on a surface of the first mixture layer. A short-circuit resistance R1 of the first mixture layer and a short-circuit resistance R2 of the second mixture layer satisfy the relationship R1 < R2.

## Description

### TECHNICAL FIELD

The present disclosure relates to a non-aqueous electrolyte secondary battery.

### BACKGROUND

In a secondary battery, there may be used an electrode having a mixture layer formed on a surface of a current collector made of metal foil. Patent Literature 1 discloses a positive electrode in which, in order to suppress an increase in direct current resistance (DCR) due to repeated charging and discharging, a second layer composed of a metal oxide such as Al₂O₃ and carbon is provided between the current collector and the mixture layer.

### CITATION LIST

### PATENT LITERATURE

PATENT LITERATURE 1: Japanese Unexamined Patent Application Publication No. 2018-60604

### SUMMARY

### TECHNICAL PROBLEM

In recent years, from the perspective of achieving a higher capacity, studies are being conducted for increasing the thickness of the mixture layer. As a result of intensive studies by the present inventors, it has been found that when the mixture layer is made thicker, movement of lithium ions within the mixture layer is hindered, and characteristics of discharge performed at a high rate tend to be degraded. In the technique disclosed in Patent Literature 1, there is a concern of decrease in battery capacity due to the second layer which does not contain an active material, and no consideration has been made regarding degradation of discharge characteristics due to increased thickness of the mixture layer, so that there is still room for improvement.

An object of the present disclosure is to provide a non-aqueous electrolyte secondary battery with improved discharge characteristics.

### SOLUTION TO PROBLEM

A non-aqueous electrolyte secondary battery according to one aspect of the present disclosure includes an electrode having: a current collector; and a mixture layer formed on a surface of the current collector and containing an active material, a conductive agent, and a binder. The mixture layer includes a first mixture layer facing the current collector, and a second mixture layer laminated on a surface of the first mixture layer. The short-circuit resistance R1 of the first mixture layer and the short-circuit resistance R2 of the second mixture layer satisfy the relationship R1 < R2.

### ADVANTAGEOUS EFFECTS OF INVENTION

According to a non-aqueous electrolyte secondary battery according to one aspect of the present disclosure, discharge characteristics can be improved.

### BRIEF DESCRIPTION OF DRAWINGS

[FIG. 1] FIG. 1 is an axial cross-sectional view of a cylindrical secondary battery according to an example embodiment.
[FIG. 2] FIG. 2 is an enlarged view of a part of a cross section of an electrode according to the example embodiment.
[FIG. 3] FIG. 3 is a Nyquist plot representing results of measurement of alternating-current impedance of positive electrode mixture layers.
[FIG. 4] FIG. 4 is a diagram showing discharge curves for Examples and Comparative Examples.

### DESCRIPTION OF EMBODIMENTS

An example embodiment of a non-aqueous electrolyte secondary battery according to the present disclosure will be described below in detail. Although a cylindrical battery in which a spiral-type electrode assembly is housed in a cylindrical outer casing is described below as an example, the electrode assembly is not limited to being of a spiral type, and may be of a laminated type formed by alternately laminating a plurality of positive electrodes and a plurality of negative electrodes one by one via separators. Further, the outer casing is not limited to being cylindrical, and may be, for example, rectangular, coin-shaped, or the like, or may be a pouch-shaped casing composed of a laminate sheet including a metal layer and a resin layer.

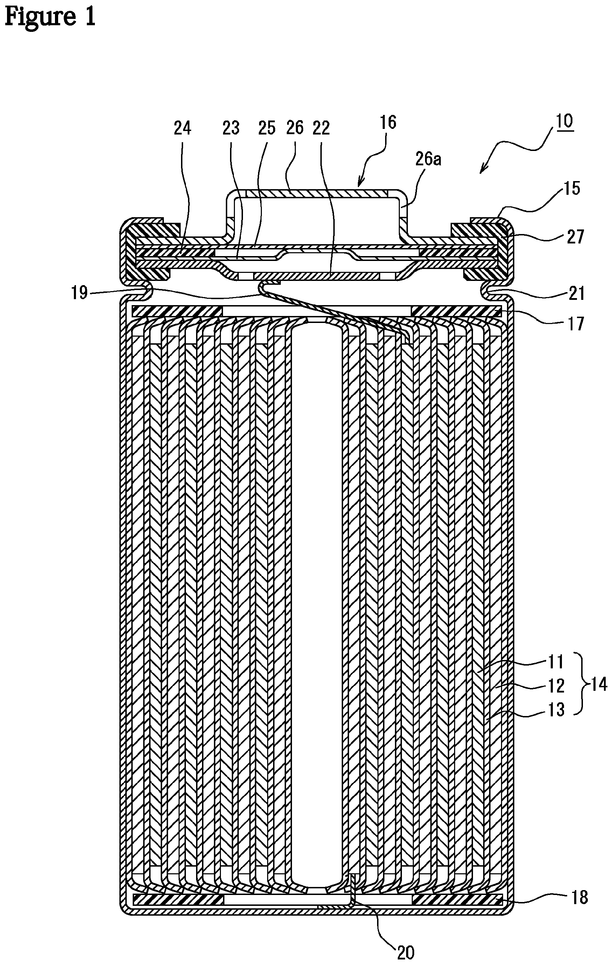

FIG. 1 is an axial cross-sectional view of a cylindrical secondary battery 10 according to an example embodiment. In the secondary battery 10 shown in FIG. 1, an electrode assembly 14 and a non-aqueous electrolyte (not shown in drawing) are housed in an outer casing 15. The electrode assembly 14 has a spiral structure formed by winding a positive electrode 11 and a negative electrode 12 with an interposed separator 13. In the following, for convenience of explanation, a side toward a sealing assembly 16 will be described as "upper", and a side toward the bottom portion of the outer casing 15 will be described as "lower".

By having an opening end portion of the outer casing 15 being closed with the sealing assembly 16, the interior of the secondary battery 10 is hermetically sealed. Insulation plates 17 and 18 are provided above and below the electrode assembly 14, respectively. A positive electrode lead 19 extends upward through a through hole in the insulation plate 17, and is welded to a lower surface of a filter 22, which is the bottom plate of the sealing assembly 16. In the secondary battery 10, a cap 26, which is the top plate of the sealing assembly 16 electrically connected to the filter 22, serves as the positive electrode terminal. Further, a negative electrode lead 20 passes through a through hole in the insulation plate 18, extends toward the bottom portion of the outer casing 15, and is welded to the inner surface of the bottom portion of the outer casing 15. In the secondary battery 10, the outer casing 15 serves as the negative electrode terminal. In cases where the negative electrode lead 20 is provided at an end edge portion, the negative electrode lead 20 extends on the outside of the insulation plate 18 and toward the bottom portion of the outer casing 15, and is welded to the inner surface of the bottom portion of the outer casing 15.

The outer casing 15 is, for example, a bottomed cylindrical metal outer can. A gasket 27 is provided between the outer casing 15 and the sealing assembly 16, and hermetic sealing of the interior of the secondary battery 10 is thereby ensured. The outer casing 15 has a grooved portion 21, which is formed, for example, by pressing a side surface portion from outside, and which supports the sealing assembly 16. The grooved portion 21 is preferably formed in an annular shape along the circumferential direction of the outer casing 15, and supports the sealing assembly 16 on its upper surface via the gasket 27.

The sealing assembly 16 comprises the filter 22, a lower valve member 23, an insulation member 24, an upper valve member 25, and the cap 26, which are stacked in this order from the electrode assembly 14 side. Each of the members constituting the sealing assembly 16 has, for example, a disk shape or a ring shape, and the respective members other than the insulation member 24 are electrically connected to each other. The lower valve member 23 and the upper valve member 25 are connected to each other at their central portions, and the insulation member 24 is interposed between peripheral edge portions of these valve members. When the internal pressure of the battery increases due to abnormal heat generation, for example, the lower valve member 23 ruptures, and the upper valve member 25 is thereby caused to swell toward the cap 26 side and separate from the lower valve member 23, so that electrical connection between the two valve members is cut off. When the internal pressure increases further, the upper valve member 25 ruptures, and gas is discharged from an opening 26a in the cap 26.

A detailed description will now be given below regarding an electrode 30 (the positive electrode 11 and the negative electrode 12) constituting the electrode assembly 14, the separator 13, and the non-aqueous electrolyte.

### [Electrode]

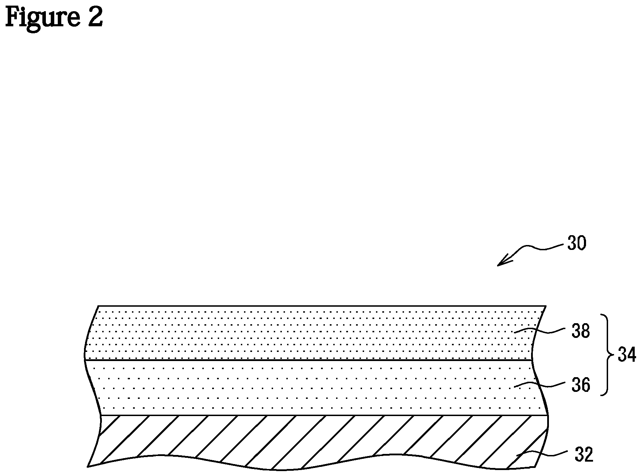

First, the electrode 30 will be described by reference to FIG. 2. FIG. 2 is an enlarged view of a part of a cross section of the electrode according to the example embodiment. The electrode 30 comprises a current collector 32 and a mixture layer 34 formed on a surface of the current collector 32. The mixture layer 34 may be formed only on one surface of the current collector 32, but is preferably formed on both surfaces of the current collector 32.

The electrode 30 may be either the positive electrode 11 or the negative electrode 12. That is, only the positive electrode 11 may have a configuration according to the electrode 30, or only the negative electrode 12 may have a configuration according to the electrode 30, or both the positive electrode 11 and the negative electrode 12 may have a configuration according to the electrode 30.

As the current collector 32, it is possible to use a metal foil, a film having a metal layer formed on its surface, or the like. The thickness of the current collector 32 is, for example, 5 to 20 µm. In the case of the positive electrode 11, a metal foil containing aluminum as the main component can be used as the current collector 32. In the case of the negative electrode 12, a metal foil containing copper as the main component can be used as the current collector 32. As used in the present specification, "main component" means a component with the highest mass ratio. The current collector 32 may be an aluminum foil that is substantially 100 % aluminum, or a copper foil that is substantially 100 % copper.

The mixture layer 34 contains an active material, a conductive agent, and a binder. As the active material for positive electrode (positive electrode active material), a lithium transition metal composite oxide is typically used. Examples of metal elements contained in the lithium transition metal composite oxide include Ni, Co, Mn, Al, B, Mg, Ti, V, Cr, Fe, Cu, Zn, Ga, Sr, Zr, Nb, In, Sn , Ta, and W. Among these, it is preferable that at least one of Ni, Co, and Mn is contained. As the active material for negative electrode (negative electrode active material), a carbon-based active material is used, such as: natural graphite such as flake graphite, massive graphite, and earthy graphite; artificial graphite such as massive artificial graphite (MAG) and graphitized mesophase carbon microbeads (MCMB); and the like. Further, a Si-based active material or the like that forms an alloy with lithium may be used as the negative electrode active material. The active material is the main component of the mixture layer 34, and the active material content in the mixture layer 34 is preferably 85 % by mass to 99 % by mass, and more preferably 90 % by mass to 99 % by mass.

The positive electrode active material is, for example, secondary particles formed by agglomeration of a plurality of primary particles. The particle size of the primary particles constituting the secondary particles is, for example, 0.05 µm to 1 µm. The particle size of the primary particles is measured as a diameter of a circle circumscribing an image of a particle observed by a scanning electron microscope (SEM). The secondary particles of the positive electrode active material are particles having a volume-based median diameter (D50) of, for example, 3 µm to 30 µm, preferably 5 µm to 25 µm, and particularly preferably 7 µm to 15 µm. D50 means a particle size at which, in a volume-based particle size distribution, the cumulative frequency from the smaller particle size side reaches 50 %, and is also called a med-level diameter. The particle size distribution of the positive electrode active material can be measured using a laser diffraction particle size distribution measuring device (e.g., MT3000II manufactured by MicrotracBEL Corp.), and using water as a dispersion medium.

Examples of the conductive agent contained in the mixture layer 34 include carbon materials such as carbon black (CB), acetylene black (AB), Ketjen black, carbon nanotubes (CNTs), and graphite. These may be used alone or by combining two or more thereof. The conductive agent is preferably acetylene black.

Examples of the binder contained in the mixture layer 34 include fluororesins such as polytetrafluoroethylene (PTFE) and polyvinylidene fluoride (PVdF), polyacrylonitrile (PAN), polyimide resins, acrylic resins, and polyolefin resins. These may be used alone or by combining two or more thereof. These resins may be used in combination with cellulose derivatives such as carboxymethyl cellulose (CMC) or salts thereof, polyethylene oxide (PEO), and the like. The binder is preferably polytetrafluoroethylene.

As shown in FIG. 2, the mixture layer 34 includes a first mixture layer 36 facing the current collector 32 and a second mixture layer 38 laminated on a surface of the first mixture layer 36. Both the first mixture layer 36 and the second mixture layer 38 contain the above-noted active material, conductive agent, and binder. The active materials, conductive agents, and binders contained in the first mixture layer 36 and the second mixture layer 38 may be identical to or different from each other. The thickness of the first mixture layer 36 is, for example, 5 µm to 200 µm, and the thickness of the second mixture layer 38 is, for example, 100 µm to 200 µm.

The short-circuit resistance R1 of the first mixture layer 36 and the short-circuit resistance R2 of the second mixture layer 38 satisfy the relationship R1 < R2. According to this feature, the resistance of the electrode 30 can be decreased and discharge characteristics of the battery can be improved. Since the first mixture layer 36 contains the active material, the first mixture layer 36 has ion conductivity and contributes to increasing the battery capacity. The short-circuit resistances R1 and R2 can be measured using an AC impedance measuring device. More specifically, R1 and R2 can be determined by measuring AC impedance over a range of 7 MHz to 0.1 Hz and plotting a Nyquist plot of the measured data.

It is preferable that the AC impedance measurement results for the first mixture layer 36 do not produce an arc in a part on the low frequency side of the Nyquist plot. When the first mixture layer 36 has conductivity to the extent that no arc is produced in the part on the low frequency side, it is possible to sufficiently decrease the resistance of the electrode 30 and improve the discharge characteristics of the battery. Further, it is preferable that, as with the first mixture layer 36, the AC impedance measurement results for the second mixture layer 38 do not produce an arc in the Nyquist plot, but there may be cases where an arc is produced in association with an increase in battery capacity (that is, for example, in association with an increase in resistance caused by reducing the conductive agent).

The content C1 of the conductive agent contained in the first mixture layer 36 and the content C2 of the conductive agent contained in the second mixture layer 38 preferably satisfy the relationship C1 > C2. According to this feature, the electrical conductivity of the first mixture layer 36 can be made higher than the electrical conductivity of the second mixture layer 38, and the discharge characteristics of the battery can be improved. C1 is preferably 3 % by mass to 20 % by mass, more preferably 5 % by mass to 15 % by mass, and particularly preferably 5 % by mass to 10 % by mass relative to the total mass of the first mixture layer 36. C2 is preferably 0 % by mass to 3 % by mass, more preferably 0.1 % by mass to 2 % by mass, and particularly preferably 0.5 % by mass to 1.5 % by mass relative to the total mass of the second mixture layer 38.

The electron conductivity A1 of the active material contained in the first mixture layer 36 and the electron conductivity A2 of the active material contained in the second mixture layer 38 preferably satisfy the relationship A1 > A2. For example, the positive electrode active material contained in the first mixture layer 36 may be an NCA-based lithium transition metal composite oxide containing Ni, Co, and Al, and the positive electrode active material contained in the second mixture layer 38 may be a NiMn-based lithium transition metal composite oxide containing Ni and Mn. The electron conductivity of an active material can be measured, for example, by measuring the electron resistance of a pellet obtained by compressing a powder. From the perspective of achieving a higher electron conductivity, the first mixture layer 36 preferably contains CNTs.

The electrode 30 can be produced, for example, according to the following steps.
(1) Dry-mix raw materials including an active material, and roll the mixture to produce a sheet-like first mixture layer 36.
(2) Dry-mix raw materials including an active material, and roll the mixture to produce a sheet-like second mixture layer 38.
(3) To a surface of a current collector 32, affix the first material mixture layer 36 and the second material mixture layer 38 in this order from the current collector 32 side to produce the electrode 30.

The raw materials preferably include a fibrous binder such as fibrillated polytetrafluoroethylene (PTFE). The fibrous binder is a dry powder, and is not a powder dispersed in an aqueous or other dispersion. According to this feature, the mixture layer 34 can be produced by a dry process involving dry mixing. Here, the dry process is a process in which no solvent is used in mixing the active material, the binder, the conductive agent, and the like. That is, the active material, the binder, the conductive agent, and the like are mixed in a state in which the solids concentration is substantially 100 %. In addition to the fibrous binder, the mixture layer 34 may contain a binder such as non-fibrillated polyvinylidene fluoride (PVdF).

In the step (1) of producing the first mixture layer 36 and the step (2) of producing the second mixture layer 38, a mixture layer 34 may be produced by first mixing the active material and the fibrous binder to produce mixture particles having a solids concentration of substantially 100 %, and then rolling and forming the mixture particles into sheet form. In the step (3) of affixing the first mixture layer 36 and the second mixture layer 38 to the current collector 32, the order of sequence in which the current collector 32, the first mixture layer 36, and the second mixture layer 38 are affixed to each other is not particularly limited. The current collector 32, the first mixture layer 36, and the second mixture layer 38 may be affixed together at the same time, or alternatively, the mixture layer 34 may first be formed by affixing the first mixture layer 36 and the second mixture layer 38 together, and then the current collector 32 and the mixture layer 34 may be affixed together. In affixing the current collector 32, the first mixture layer 36, and the second mixture layer 38 to each other, for example, these may be passed between two rolls so that a linear pressure is applied thereto.

### [Separator]

As the separator 13, a porous sheet having ion permeability and insulation property is used. Specific examples of the porous sheet include a microporous thin film, woven fabric, and non-woven fabric. As the material of the separator 13, polyolefins such as polyethylene and polypropylene, cellulose, and the like are suitable. The separator 13 may have either a single-layer structure or a laminate structure. Further, on a surface of the separator 13, there may be provided a layer of highly heat-resistant resin such as aramid resin, or a filler layer containing an inorganic compound filler.

### [Non-Aqueous Electrolyte]

The non-aqueous electrolyte (electrolyte solution) contains a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least a part of hydrogens in the above solvents with halogen atoms such as fluorine. Examples of the halogen-substituted product include fluorinated cyclic carbonate esters such as fluoroethylene carbonate (FEC), fluorinated chain carbonate esters, fluorinated chain carboxylate esters such as methyl fluoropropionate (FMP), and the like.

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate.

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borates such as Li₂B₄O₇ and Li(B(C₂O₄)F₂), and imide salts such as LiN(SO₂CF₃)₂ and LiN(CₗF₂ₗ₊₁SO₂)(CₘF₂ₘ₊₁SO₂) (where each of l and m is an integer of 0 or greater). As the lithium salt, a single type among the above may be used alone, or a plurality of types may be mixed and used. Among the foregoing, it is preferable to use LiPF₆ in consideration of ion conductivity, electrochemical stability, and the like. The concentration of the lithium salt is, for example, preferably 0.8 mol to 1.8 mol per 1 liter of the non-aqueous solvent.

### EXAMPLES

While the present disclosure will be further described below using Examples, the present disclosure is not limited to these Examples.

### <Example 1>

### [Production of Positive Electrode Mixture Layers]

First positive electrode mixture particles were prepared by putting, into a mixer, positive electrode active material particles composed of LiNi_{0.5}Co_{0.2}Mn_{0.3}O₂, acetylene black (AB), and polytetrafluoroethylene (PTFE) at a mass ratio of 94:3:3, and performing thereon a mixing processing. After that, the first positive electrode mixture particles were rolled by being passed between two rolls, and a first positive electrode mixture layer having a thickness of 130 µm was produced. Second positive electrode mixture particles were prepared by putting, into a mixer, positive electrode active material particles composed of LiNi_{0.5}Co_{0.2}Mn_{0.3}O₂, acetylene black (AB), and polytetrafluoroethylene (PTFE) at a mass ratio of 98:1:1, and performing thereon a mixing processing. After that, the second positive electrode mixture particles were rolled by being passed between two rolls, and a second positive electrode mixture layer having a thickness of 110 µm was produced.

### [Production of Positive Electrode]

On one surface of an Al foil serving as a positive electrode current collector, the first positive electrode mixture layer and the second positive electrode mixture layer were laminated in this order from the positive electrode current collector side. In that state, the positive electrode current collector, the first positive electrode mixture layer, and the second positive electrode mixture layer were pressed and formed into one unit using two rolls. Subsequently, the product was cut into a predetermined electrode size, and a positive electrode was thereby obtained.

### [Production of Negative Electrode]

A lithium foil was cut into a predetermined electrode size, and a negative electrode was thereby obtained.

### [Electrolyte Solution]

Ethylene carbonate (EC), dimethyl carbonate (DMC), and ethyl methyl carbonate (EMC) were mixed at a volume ratio of 20:75:5. Into this mixed solvent, lithium hexafluorophosphate (LiPF₆) was dissolved to a concentration of 1.3 mol/liter, and an electrolyte solution was thereby obtained.

### [Test Cell]

An electrode assembly, which was formed by arranging the above positive electrode and the above negative electrode facing each other via a polypropylene separator, and the above electrolyte solution were placed in a cup-shaped battery housing. The battery housing was sealed by a sealing plate via a gasket provided at the opening of the battery housing, and a test cell was thereby produced.

### <Example 2>

A test cell was produced in the same manner as in Example 1 except that, in producing the first positive electrode mixture layer, the mixing ratio of the positive electrode active material particles, AB, and PTFE was changed to 90:5:5 in mass ratio.

### <Example 3>

A test cell was produced in the same manner as in Example 1 except that, in producing the first positive electrode mixture layer, the mixing ratio of the positive electrode active material particles, AB, and PTFE was changed to 85:10:5 in mass ratio.

### <Comparative Example 1>

A test cell was produced in the same manner as in Example 1 except that, in producing the positive electrode, only the second positive electrode mixture layer was laminated on the one surface of the Al foil, and in that state, pressing was performed to form the positive electrode current collector and the first positive electrode mixture layer into one unit.

### <Comparative Example 2>

A test cell was produced in the same manner as in Example 1 except that, in producing the first positive electrode mixture layer, the mixing ratio of the positive electrode active material particles, AB, and PTFE was changed to 98:0:2 in mass ratio.

### [Measurement of AC Impedance of Positive Electrode Mixture Layers]

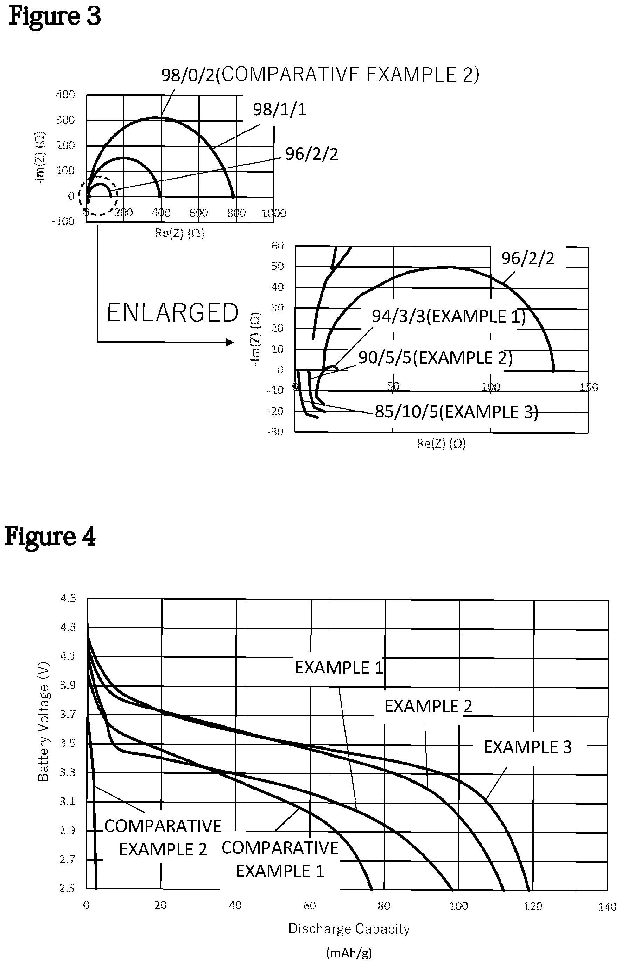

Positive electrode mixture layers were produced by varying the mixing ratio of positive electrode active material particles composed of LiNi_{0.5}Co_{0.2}Mn_{0.3}O₂, AB, and PTFE, and AC impedance of each of the positive electrode mixture layers was measured. More specifically, positive electrode active material particles, AB, and PTFE in each predetermined mixing ratio were subjected to a mixing processing in a mixer to thereby prepare positive electrode mixture particles, and then the positive electrode mixture particles were rolled by being passed between two rolls to produce a positive electrode mixture layer having a thickness of 130 µm. There were produced six positive electrode mixture layers in which the mixing ratio of positive electrode active material particles/AB/PTFE was set to 98/0/2, 98/1/1, 96/2/2, 94/3/3, 90/5/5, 85/10/5 in mass ratio, respectively. FIG. 3 is a Nyquist plot representing measurement data obtained by measuring alternating-current impedance of the respective mixture layers over a range of 7 MHz to 0.01 Hz using an alternating-current impedance measuring device.

### [Evaluation of Discharge Characteristics]

In a temperature environment of 25 °C, each of the test cells of the Examples and Comparative Examples was charged at a constant current of 0.05 C until the battery voltage reached 4.5 V. After that, discharging was performed at a constant current of 0.7 C until the battery voltage reached 2.5 V.

FIG. 4 shows results of evaluation of discharge characteristics regarding the test cells of the Examples and Comparative Examples.

As can be seen from FIG. 4, in all of Examples 1 to 3, as compared to in Comparative Examples 1 and 2, the discharge capacity was improved, and the voltage values were higher. It can be confirmed that the discharge characteristics are improved by the presence of the first positive electrode mixture layer having a short-circuit resistance that is lower than that of the second positive electrode mixture layer.

### REFERENCE SIGNS LIST

10 secondary battery; 11 positive electrode; 12 negative electrode; 13 separator; 14 electrode assembly; 15 outer casing; 16 sealing assembly; 17, 18 insulation plate; 19 positive electrode lead; 20 negative electrode lead; 21 grooved portion; 22 filter; 23 lower valve member; 24 insulation member; 25 upper valve member; 26 cap; 26a opening; 27 gasket; 30 electrode; 32 current collector; 34 mixture layer; 36 first mixture layer; 38 second mixture layer.

## Claims

1. A non-aqueous electrolyte secondary battery, comprising
an electrode having:
a current collector; and
a mixture layer formed on a surface of the current collector and containing an active material, a conductive agent, and a binder, wherein
the mixture layer includes a first mixture layer facing the current collector, and a second mixture layer laminated on a surface of the first mixture layer, and
short-circuit resistance R1 of the first mixture layer and short-circuit resistance R2 of the second mixture layer satisfy a relationship R1 < R2.

2. The non-aqueous electrolyte secondary battery according to claim 1, wherein AC impedance measurement results for the first mixture layer do not produce an arc in a part on a low frequency side of a Nyquist plot.

3. The non-aqueous electrolyte secondary battery according to claim 1 or 2, wherein content C1 of the conductive agent contained in the first mixture layer and content C2 of the conductive agent contained in the second mixture layer satisfy a relationship C1 > C2.

4. The non-aqueous electrolyte secondary battery according to any one of claims 1 to 3, wherein electron conductivity A1 of the active material contained in the first mixture layer and electron conductivity A2 of the active material contained in the second mixture layer satisfy a relationship A1 > A2.

5. The non-aqueous electrolyte secondary battery according to any one of claims 1 to 4, wherein the conductive agent is acetylene black.

6. The non-aqueous electrolyte secondary battery according to any one of claims 1 to 5, wherein the binder is polytetrafluoroethylene.
